# FASCICULE DE BREVET EUROPEEN

(11) **EP 0 789 118 B1**
(45) Date de publication et mention de la délivrance du brevet: **05.07.2000**
(21) Numéro de dépôt: 96440025.3
(22) Date de dépôt: 29.03.1996
(51) Int. Cl.: E04H 3/12, B60P 3/025

(54) **Remorque déployable en gradins**
Anhänger mit ausklappbarer Bühne
Trailer with deployable grandstand

(30) Priorité: 09.02.1996 FR 9601774
(43) Date de publication de la demande: 13.08.1997
(73) Titulaire: S.A. GUILLET, F-67127 Molsheim Cedex (FR)
(72) Inventeur: Guillet, Gilles, 67380 Lingosheim (FR)
(74) Mandataire: Littolff, Denis

(56) Documents cités:
- EP-A- 0 370 556
- DE-U- 8 424 684
- FR-A- 2 599 074
- GB-A- 2 206 364
- US-A- 3 914 909
- US-A- 5 152 109

## Description

La présente invention concerne un système de gradins repliable et mobile. Elle vise plus spécialement un véhicule, qui peut être un camion ou une remorque tractée, équipé d'un système qui, à l'état replié, respecte les normes dimensionnelles du Code de la Route et qui, à l'état déployé, constitue une structure en gradins pouvant être utilisée comme tribune pour les spectateurs d'une manifestation culturelle ou sportive. Une particularité très importante de cette structure est de pouvoir être repliée et déployée en une seule opération simple, ne demandant que quelques minutes.

Il existe déjà des structures repliables mobiles, par exemple des remorques transformables en scène. Par exemple, la demande du brevet européen 95440015.6 du déposant décrit un tel véhicule de type remorque pouvant être transformé en un espace scénique développé à partir de l'enveloppe initiale dudit véhicule, laquelle comprend un châssis allongé recouvert d'un plancher central, une toiture centrale fixée à au moins deux couples de mâts télescopiques situés aux deux extrémités du véhicule, deux façades latérales, chacune composée de deux pans dont l'un est articulé au niveau de l'arête longitudinale latérale supérieure et l'autre au niveau de l'arête longitudinale latérale inférieure, comportant des moyens permettant d'associer le relèvement du toit et le basculement d'au moins un pan de chaque façade latérale longitudinale, ce véhicule étant caractérisé en ce que lesdits moyens comprennent deux systèmes mécaniques associés à deux phases séquentielles de déploiement du véhicule, une première phase amorçant simultanément l'agrandissement des poteaux télescopiques et le basculement latéral d'au moins deux pans symétriques, et une seconde phase achevant l'élévation de la toiture centrale et le basculement simultané desdits pans latéraux jusqu'à atteindre l'horizontalité, lesdits systèmes étant commandés par au moins un organe de commande manuel réglant l'amplitude du mouvement généré séquentiellement par les deux systèmes à chaque manipulation.

Comme le montrent les deux figures 3 et 4 de la demande de brevet européen précitée, la structure, une fois déployée, occupe en largeur et en hauteur un espace double de celui du véhicule contenant la même structure repliée, de sorte que d'une part ledit véhicule est conforme aux normes dimensionnelles du Code de la Route, et d'autre part la structure déployée constitue un espace scénique de dimensions acceptables pour la représentation d'un spectacle.

Le déploiement de la structure s'effectue très simplement, des moyens étant prévus pour associer, dans une même manoeuvre manuelle, les deux phases de déploiement du véhicule, une première phase amorçant simultanément l'agrandissement des poteaux télescopiques et le basculement latéral d'au moins deux pans symétriques, et une seconde phase achevant l'élévation de la toiture centrale et le basculement simultané desdits pans latéraux jusqu'à atteindre l'horizontalité, lesdits systèmes étant commandés par au moins un organe de commande manuel réglant l'amplitude du mouvement généré séquentiellement par les deux systèmes à chaque manipulation.

La présente invention peut être considérée comme une extrapolation de ce système à une structure différente, et d'application complémentaire, à savoir la création de gradins formant tribune.

Le brevet britannique référencé GB-A-2 206 364 décrit également une remorque pouvant être transformée en des gradins inclinés pour réaliser rapidement, sur un site choisi par l'utilisateur, une tribune provisoire.

La structure de cette remorque comporte un châssis inférieur principal doté de deux ailes longitudinales pivotant le long des grands bords d'une plate-forme centrale. Cet équipement comporte également une toiture qui peut être relevée en position déployée, et abaissée en position repliée, notamment lorsque la remorque est tirée par un véhicule.

Pour favoriser le repliage dans le volume minimal pris par la remorque en position repliée, la plate-forme latérale pivotante constituant la partie inférieure des gradins comprend elle-même deux portions pivotantes autour d'un axe parallèle au grand axe de la remorque. La portion extérieure peut ainsi être rabattue contre la portion intérieure, en position repliée, d'où un gain de surface en position déployée.

Deux mâts d'extrémité supportent une structure en V soutenant la toiture. Ces mâts sont fixés à la structure inférieure via une double poutrelle pivotante qui leur permet un changement de position ayant notamment une composante verticale.

Ce mouvement, ainsi que la plupart des autres déplacements, par exemple ceux des plate-formes latérales et des pans latéraux de la toiture, sont impulsés par des vérins indépendants les uns des autres, conférant à cette remorque un degré d'automatisation élevé.

La remorque de l'invention ne fait pas partie de cette catégorie, car tous les déplacements sont commandés manuellement et simultanément. Les moyens mécaniques utilisés pour la commande ne nécessitent pas d'apport extérieur d'énergie, d'où une plus grande souplesse d'utilisation : il n'y a pas lieu de se préoccuper de l'existence d'une source d'énergie, laquelle limite au surplus les emplacements d'utilisation possible de la remorque. Sa conception simplifiée la rend de plus économiquement très intéressante.

Le véhicule selon l'invention est également du type comportant un châssis allongé recouvert d'une plate-forme centrale, une toiture centrale fixée à au moins deux couples de mâts télescopiques situés vers les extrémités du véhicule, et deux façades latérales articulées au niveau de l'arête longitudinale supérieure de cette toiture. Sur les bords longitudinaux de la plate-forme centrale sont dressés des éléments verticaux sur les faces extérieures desquels pivotent, entre une position repliée dans laquelle elles sont enfermées entre les façades latérales et une position dans laquelle elles forment une structure d'allure oblique sensiblement continue, deux plates-formes longitudinales latérales supportant chacune au moins deux rangées de sièges sensiblement parallèles à l'axe longitudinal du véhicule.

L'apport simplificateur de l'invention réside dans l'existence de moyens prévus pour le repliement et le déploiement simultané des plate-formes latérales, en vue de former le plancher de la tribune, lesdits moyens étant basés sur un système fonctionnant par traction sur des câbles accrochés au voisinage du bord longitudinal extérieur de chaque plate-forme, à chaque extrémité de celle-ci, et commandés manuellement à partir des mâts télescopiques.

Dans une telle structure, le déploiement de la toiture s'effectue de façon connue par extension des mâts télescopiques et ouverture sensiblement à l'horizontale, ou suivant une légère inclinaison commune des façades latérales, tandis que, selon l'invention, les deux plates-formes latérales s'épanouissent de l'intérieur vers l'extérieur pour former un plancher en gradins, par pivotement le long de leurs bords longitudinaux intérieurs, ce pivotement, dans le sens de cet épanouissement, résultant du poids propre desdites plates-formes, tandis que le repliement du même ensemble est déterminé par une traction exercée par au moins un câble accroché à leurs bords longitudinaux extérieurs, et connecté à un système mécanique doté d'une paire de moufles, l'une étant fixée au coulisseau du mât télescopique, alors que l'autre est fixée à la partie immobile dudit mât

Plus précisément, chaque extrémité de l'une des plates-formes latérales est tractée par un câble dont une extrémité est fixée au niveau de la moufle mobile, et s'enroule autour d'une poulie de la moufle fixe, l'autre extrémité étant fixée à ladite plate-forme.

Additionnellement, chaque extrémité de la seconde plate-forme latérale est tractée par un câble dont une extrémité est fixée au niveau de la moufle fixe, puis s'enroule autour d'une poulie de la moufle mobile, et s'enroule enfin autour d'une poulie de la moufle fixe, l'autre extrémité étant fixée à ladite plate-forme.

L'inclinaison des deux plates-formes résulte également du fait que leurs points de pivotement respectifs sont à des hauteurs différentes sur les deux côtés longitudinaux du châssis, c'est-à-dire que les éléments verticaux sur lesquels le pivotement a lieu sont de hauteur différente.

En réalité, lesdits éléments verticaux des bords longitudinaux de la plate-forme centrale sur lesquels pivotent les plates-formes latérales sont des profilés servant eux-mêmes de supports à des rangées fixes de sièges.

La largeur respective des deux plates-formes sera déterminée en fonction de la largeur totale de la tribune, compte tenu des contraintes de sécurité visant notamment la portion la plus élevée, qui est en porte-à-faux, tandis que la portion la moins élevée avoisine le niveau du sol.

Afin d'optimiser le nombre de places sur la tribune dépliée, d'autres éléments verticaux de type profilés sont disposés entre lesdits éléments verticaux des bordures longitudinales, et supportent également des rangées de sièges.

Les mêmes éléments de type profilés sont d'ailleurs disposés sur les plates-formes latérales de manière à être verticaux quand lesdites plates-formes sont déployées.

Dans cette position, ces dernières viennent en butée contre des éléments fixés à la plate-forme centrale.

Pour assurer la sécurité de l'ensemble du système de l'invention en position déployée, des vérins et/ou des poutrelles d'appui sont répartis longitudinalement le long des bords extérieurs longitudinaux des plates-formes, de manière à assurer leur stabilité et la solidité de l'ensemble déployé.

En outre, des garde-corps sont placés aux extrémités de chaque travée de sièges et derrière la dernière travée supérieure de sièges.

De préférence, selon une caractéristique additionnelle, la plate-forme centrale comporte un crochet de remorquage amovible, en vue de permettre l'accrochage, à un même engin de traction, de plusieurs plates-formes semblables qui, mises bout à bout, constitueront une tribune de même hauteur, mais de plus grande longueur.

De préférence encore, la toiture peut être légèrement inclinée en sens inverse de l'inclinaison de la tribune, de manière à former un auvent de protection contre les intempéries.

Parmi les avantages techniques majeurs proposés par l'invention, qui la rendent à ce titre particulièrement attractive, on peut citer notamment :
- le positionnement simultané des deux plates-formes latérales, qui ne sont pas de la même largeur, ni positionnées au même niveau. A ce sujet, celle qui est en porte-à-faux est soutenue par des poutrelles verticales qui relient sa bordure inférieure latérale à des éléments d'appui stabilisateurs du type vérins de positionnement. En effet, le fait qu'elle soit en butée contre des éléments verticaux en position dépliée ne suffit pas à garantir mécaniquement sa tenue, notamment car les contraintes d'une telle structure en charge sont énormes.
- la rapidité du déploiement, qui peut être effectué en approximativement une demi-heure par deux personnes.

Le résultat final obtenu est une tribune prévue pour plus de 120 personnes, protégée contre les intempéries, et repliable pour être déplacée vers un autre site, en étant tractée par un véhicule qui peut être conduit sans permis spécial.

On va maintenant décrire l'invention en se référant au dessin annexé, qui illustre schématiquement un mode de réalisation.

Sur ce dessin :
- La figure 1 est une coupe verticale du véhicule selon l'invention, la structure qui y est logée étant à l'état replié ;
- La figure 2 est une coupe schématique du même véhicule, faisant apparaître la structure à l'état déployé sous forme d'une tribune formée de gradins garnis de sièges et protégée par un auvent ;
- La figure 3 est une vue schématique de face de la tribune déployée, sous forme d'une remorque séparée de son tracteur, et reposant sur le sol, d'une part par deux couples de roues centrales, d'autre part par des vérins d'appui ;
- Les figures 4a et 4b représentent des détails agrandis des structures latérales, dans les deux positions repliée et dépliée ;
- Les figures 5a et 5b montrent une vue de face et une vue de côté de la structure mécanique à moufle fixe et moufle mobile.

Sur ce dessin, on a représenté très schématiquement le châssis 1 d'un véhicule pouvant rouler sur des roues 2. Ce véhicule peut être un camion, mais il s'agit de préférence d'une remorque tractée.

Le châssis 1 supporte en réalité une plate-forme centrale 3 à laquelle sont fixés des mâts télescopiques 4 - 4', la base 4 étant fixe et le coulisseau 4' pouvant coulisser dans la base 4, par tout moyen connu, et notamment ceux qui sont décrits dans la demande de brevet EP 95440015.6 précitée.

La partie supérieure du mât 4' porte d'une part une toiture centrale 5, et d'autre part des panneaux latéraux supérieurs 6, 6' articulés le long des arêtes longitudinales 7, 7' de ladite toiture centrale. Ces panneaux sont constitués de façon connue d'une structure de poutrelles métalliques recouvertes d'une bâche, qui couvre également la toiture centrale 5.

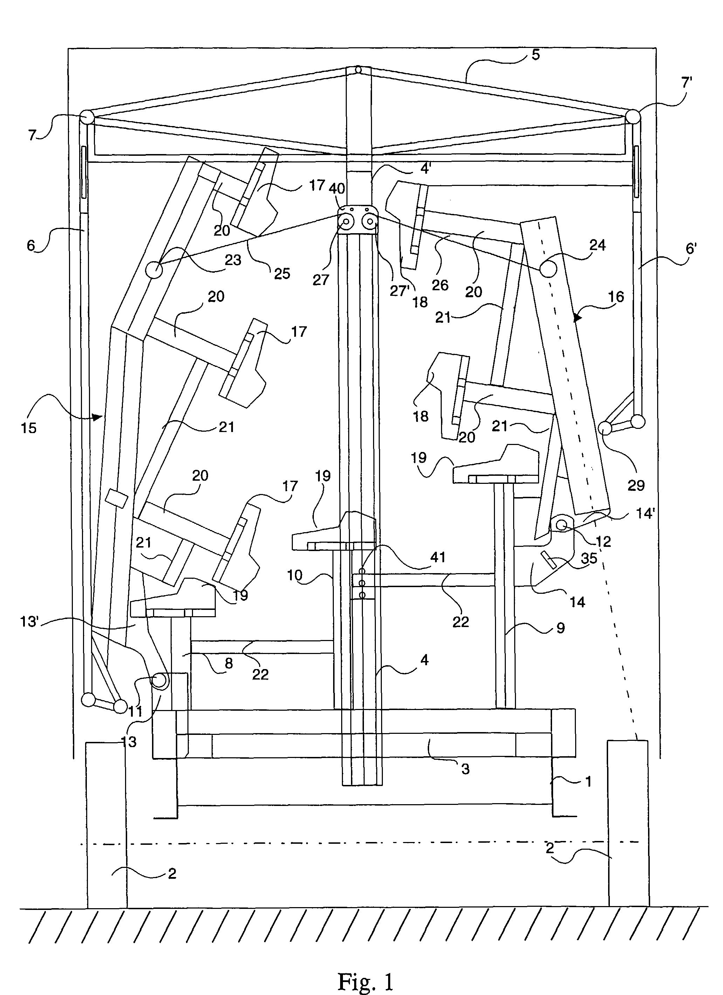

Les panneaux 6, 6' à l'état replié (figure 1) constituent les façades latérales du véhicule, le mât 4' étant lui-même en position entièrement encastrée dans le mât 4. Dans cette configuration, le véhicule est conforme aux normes dimensionnelles du Code de la Route. Le véhicule se présente sous forme d'un camion ou d'une remorque banale, sous réserve de l'espace vertical laissé vide entre le bord extérieur du panneau 6' et le châssis 1. Cet espace est toutefois pratiquement inaccessible en raison de l'aménagement intérieur de la structure repliée, comme on le verra plus loin.

Selon l'invention, sur le plancher 1 sont érigés des éléments verticaux disposés longitudinalement 8, 9 et 10, de hauteurs différentes, et qui remplissent diverses fonctions précisées ci-après.

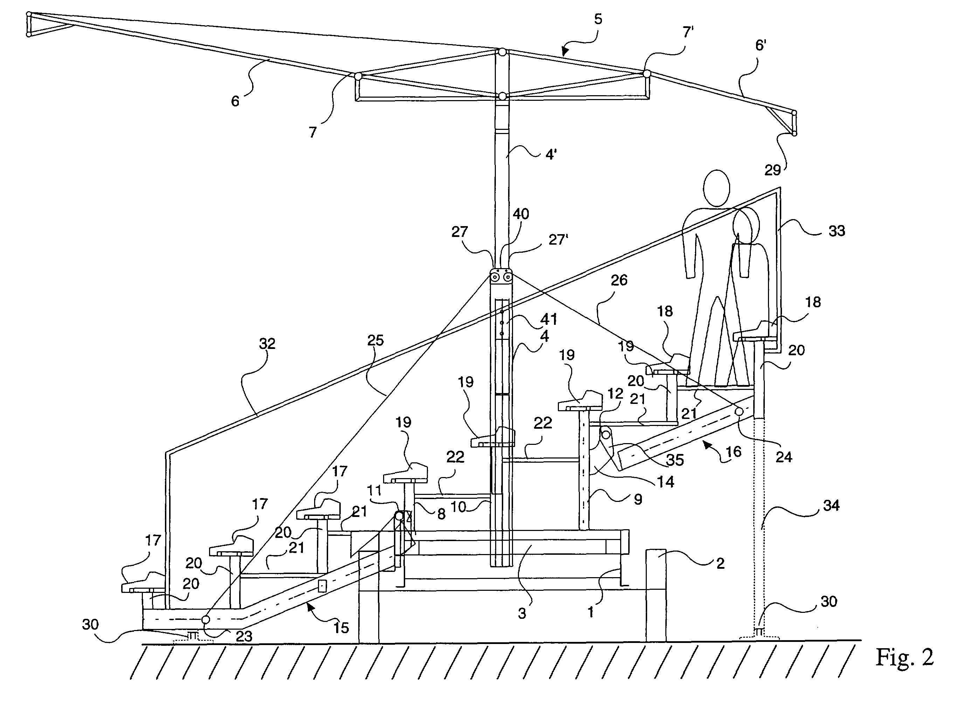

En premier lieu, à l'extérieur des éléments 8 et 9 sont articulées en 11 et 12 éventuellement par l'intermédiaire de supports appropriés 13, 14 respectivement, des plates-formes longitudinales 15, 16 pouvant prendre deux positions extrêmes, à savoir une position repliée, où elles sont complètement enfermées entre les façades latérales, elles-mêmes repliées verticalement, 6, 6' (figure 1) et une position déployée, où elles s'épanouissent pour former deux structures ayant la même inclinaison (figure 2).

Sur ces plates-formes sont montées des rangées de sièges, 17 sur la plate-forme 15 et 18 sur la plate-forme 16, sur des socles 20 orientés de telle manière qu'ils sont tous verticaux dans la position déployée de la structure. Ces socles 20 sont réunis par des passages horizontaux 21 constituant les planchers intermédiaires sur lesquels se déplacent les utilisateurs.

Par ailleurs, les éléments 10, s'étendant longitudinalement d'un couple de mâts 4, 4' à l'autre aux deux extrémités de la structure, portent, comme les éléments verticaux 8 et 9, des sièges 19, également fixes, tous ces éléments étant réunis par des passages horizontaux fixes 22, qui peuvent servir à l'inspection de la structure en position fermée, en plus de l'utilisation précitée.

L'ensemble des plates-formes inclinées 15, 16, des éléments verticaux/socles et des passages horizontaux 17 - 22 constitue ainsi une tribune complète, facile à transporter en configuration repliée et facile à installer en configuration d'exploitation, comme expliqué ci-après :

Aux bords longitudinaux extérieurs des plates-formes 15, 16 sont accrochés, respectivement à des poutrelles 23, 24 des câbles 25, 26 qui, par l'intermédiaire de poulies de renvoi 27, 27', vont permettre la manipulation via un treuil/manivelle 46 situé au bas du mât 4. Ainsi, en une seule manoeuvre manuelle très rapide, la structure peut être amenée de l'état replié à l'état déployé et inversement. Pour tenir compte de la différence de longueur opérationnelle entre les câbles 25 et 26, on a recourt à une structure à moufles qui sera expliquée plus en détail dans la suite.

A la différence des toitures classiques telles que celle représentée à la demande européenne précitée, la toiture associée à la structure de tribune selon l'invention prend, une fois déployée, une configuration semblable à celle des toitures de tribunes fixes, par exemple dans les stades. A cet effet, le panneau 6 est sensiblement plus long que le panneau 6', de manière à abriter toute la largeur inférieure de la tribune, et ce panneau 6 est relevé au-dessus de l'horizontale, de manière que l'ensemble des panneaux 6 - 6' présente une inclinaison constante et continue, étant bien entendu que la partie la plus basse 29 du panneau 6' demeure bien au-dessus de la taille moyenne du public debout, comme illustré à la figure 2.

On notera, par la figure 1, que ladite extrémité 29 du panneau 6' vient, à l'état replié, pratiquement au contact du dessous de la plate-forme 16, de sorte que la succession panneau 6' - plate-forme 16 - éléments 9 assure pratiquement la continuité de la façade correspondante du véhicule.

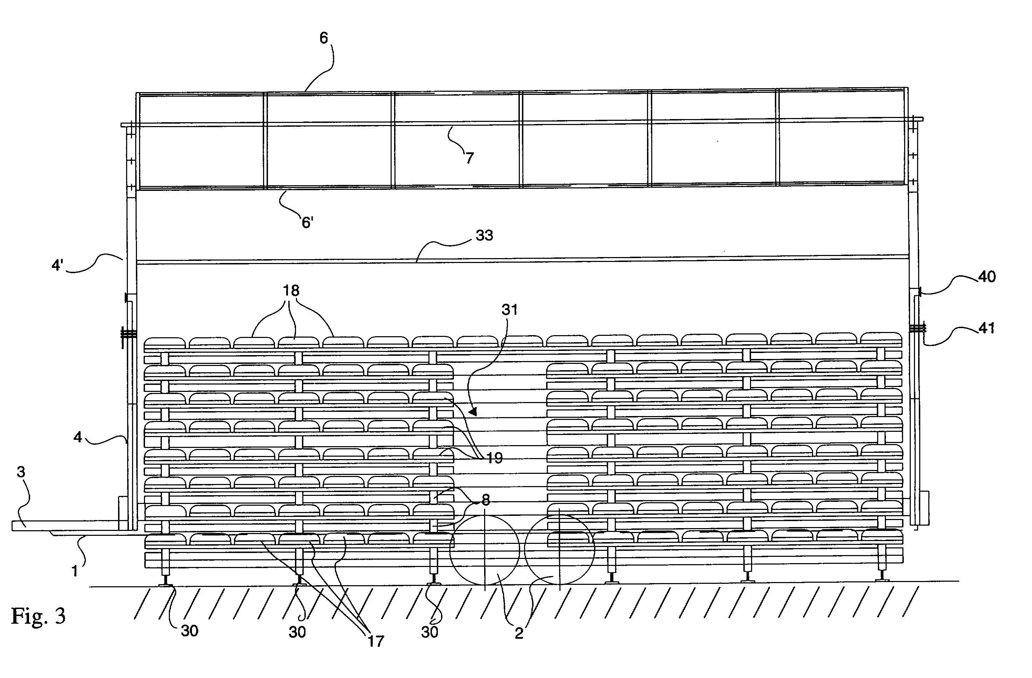

Par ailleurs, comme il apparaît sur les figures 2 et 3, outre les roues 2, la tribune déployée repose sur le sol par des vérins d'appui 30, qui sont répartis longitudinalement au-dessous des extrémités extérieures des plates-formes 15 et 16. Dans le dernier cas particulier de la plate-forme 16, ces vérins sont placés dans le prolongement de poutrelles verticales 34 supportant directement la plate-forme 16 positionnée en porte-à-faux.

On notera également sur la figure 3 qu'une allée centrale 31 formée de marches de hauteur standard sépare deux groupes de travées de sièges.

Enfin, pour des raisons de sécurité évidentes, des garde-corps 32, 33 sont prévus aux extrémités de chaque travée de sièges et derrière la dernière travée supérieure. Ces garde-corps sont par exemple des poutrelles cylindriques boulonnées à intervalles réguliers le long des bords concernés.

Ces garde-corps sont fixes sur les côtés latéraux de la tribune. Par contre, le long du bord longitudinal supérieur, ils sont repliables, par exemple par pivotement autour d'axes situés à la base des sièges supérieurs.

Bien entendu, sous réserve des normes dimensionnelles réglementaires, les dimensions des éléments de la structure selon l'invention sont quelconques, adaptées à l'usage auquel est destinée la tribune. Il en est de même du nombre de ces éléments à savoir le nombre de travées et de sièges.

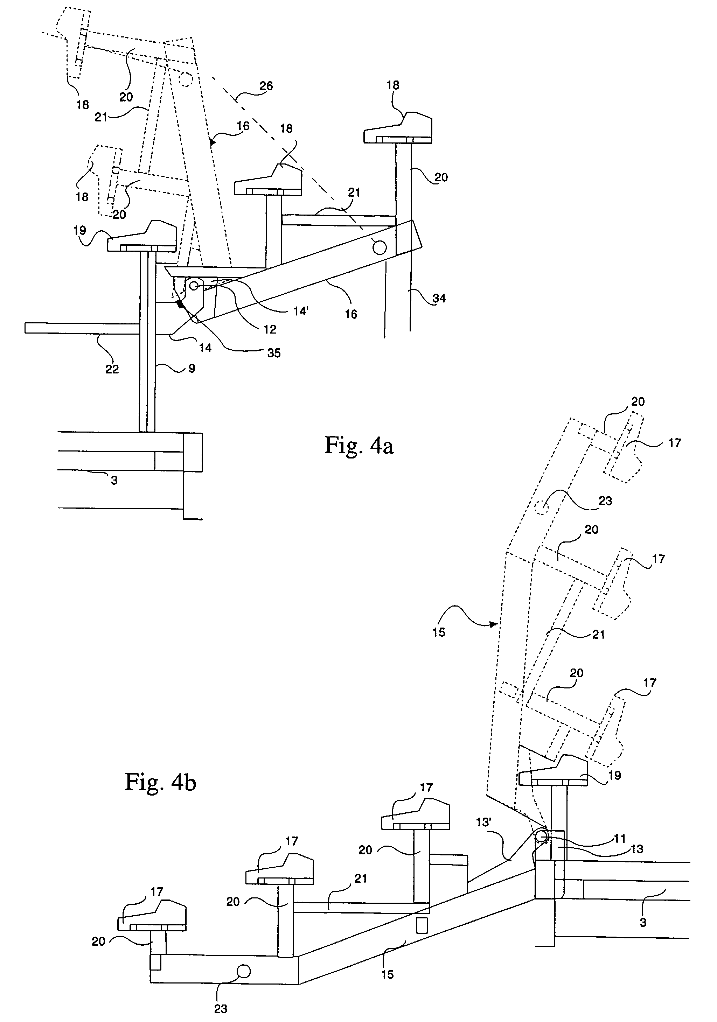

Les figures 4a et 4b permettent de se faire une idée plus précise des mécanismes de pivotement des plates-formes longitudinales latérales identifiées aux structures 15 et 16. Sur chacune de ces figures, on a représenté simultanément l'état replié et l'état déployé, de manière à clairement faire figurer l'amplitude du mouvement.

En figure 4a, en plus des éléments déjà décrits précédemment, l'élément de chape de pivotement 14 comporte une butée 35 sur laquelle reposent, en position déployée, les éléments 14' de la chape, fixés sur la structure latérale 16. Compte tenu du poids et du moment subséquent au niveau de la charnière de pivotement, représentée par ces chapes situées au niveau des éléments verticaux 9, une telle butée 35 ne suffit pas à assurer le maintien de l'ensemble déplié. C'est pourquoi, on a rajouté des poutres 34 surmontant des dispositifs d'appui réglables 30.

Cette figure, de même que la figure 4b, montre bien l'amplitude circulaire du mouvement, et l'augmentation de surface utile qui en résulte pour la fonction recherchée.

Dans cette dernière figure, la configuration de la chape de pivotement 13, 13' est inversée : la partie 13' est solidarisée à la structure 15, et l'enveloppe double 13 est fixée sur la plate-forme centrale 3. Dans ce cas, la butée se produit au niveau de la surface verticale longitudinale du bord de la structure métallique de ladite plate-forme centrale 3. Compte tenu du niveau de cette structure latérale 15, il n'y a pas de poutrelles prévues additionnellement aux dispositifs d'appui réglables 30. Ces derniers permettent comme leurs homologues de l'autre face notamment mais non exclusivement d'adapter la structure dépliée à des terrains irréguliers.

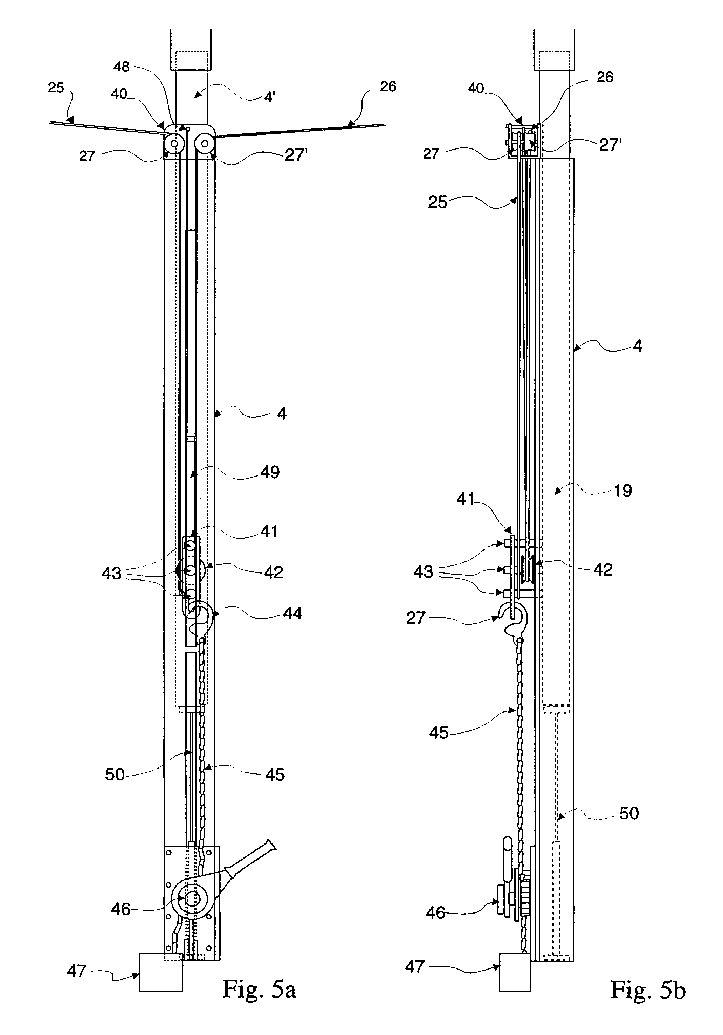

Les figures 5a et 5b montrent la structure de la paire de moufles 40, 41 en relation avec les mâts 4 et leurs coulisseaux 4', en vue de face et de côté. Ainsi, il apparaît que la moufle 40 fixée au mât 4 comporte deux poulies 27, 27' autour desquelles sont enroulés les câbles 25 et 26. Le câble 26 est fixé à l'une des ses extrémités à un point fixe 48, d'où il se dirige vers une poulie 42 de la moufle 41 solidarisée au coulisseau 4'.

Cette moufle mobile 41 comporte schématiquement trois arbres 43 coulissant dans une lumière 49 pratiquée dans le mât 4 ; l'arbre central 43 comporte ladite poulie 42, alors que l'arbre inférieur sert de point fixe à l'extrémité du câble 25.

A son extrémité inférieure, cette moufle mobile 41 comporte une ouverture coopérant avec un crochet 44 placé, en bout d'une chaîne 45 reliée à la manivelle 46. Le tronçon de chaîne non utilisé repose dans un boîtier 47 localisé sous ladite manivelle 46. A l'extrémité inférieure du mât 4, un dispositif du type vérin à gaz 50 peut être prévu pour aider la première phase du déploiement avant que l'énergie gravitationnelle des plates-formes latérales soit suffisante, ainsi que cela est décrit en détail dans la demande de brevet EP 95440015.6.

La structure ainsi décrite permet d'effectuer le double de course pour une plate-forme par rapport à la course simultanée de l'autre. En l'occurrence, la structure 15, la plus basse, nécessite une course du câble 25 plus importante que celle du câble 26 tractant la structure 16 haute.

Bien entendu, la description ci-dessus ne doit être considérée que comme un exemple non limitatif de l'invention, qui contient au contraire les variantes contenues dans les revendications annexées, et à la portée de l'homme de l'art.

## Revendications

1. Système de tribune à gradins repliable et mobile, du type se composant d'un châssis (1) monté sur roues (2) et portant une plate-forme (3) horizontale centrale, ladite plate-forme (3) étant équipée d'éléments verticaux (8, 9) sur l'extérieur desquels sont montées, pivotantes autour d'axes horizontaux (11, 12), deux plates-formes (15, 16) longitudinales latérales pouvant prendre une première configuration dans laquelle, étant repliées l'une vers l'autre, elles constituent un ensemble dont les dimensions volumiques respectent les normes réglementaires applicables aux véhicules du type remorque, et qui peut être déplacé par un véhicule comportant ledit châssis (1) sur roues (2), et une seconde configuration dans laquelle, déployées vers l'extérieur à des niveaux différents, elles constituent une structure d'allure plane oblique pouvant recevoir des sièges (17, 18) montés en gradins, constituant une tribune autonome, ladite plate-forme horizontale centrale portant au moins deux couples de mâts télescopiques (4, 4') situés vers les extrémités de la plate-forme centrale (3), ces mâts (4, 4') supportant une toiture centrale (5), sur les arêtes longitudinales extérieures de laquelle sont articulés deux panneaux (6, 6') formant des façades latérales, caractérisé en ce que des moyens sont prévus pour le repliement et le déploiement simultané desdites plates-formes (15, 16) en vue de former le plancher de ladite tribune, basés sur un système fonctionnant par traction sur des câbles (25, 26) accrochés au voisinage du bord longitudinal extérieur de chaque plate-forme (15, 16), à chaque extrémité de celle-ci, et commandés manuellement à partir des mâts télescopiques (4, 4').

2. Système de gradins repliable et mobile selon la revendication 1, caractérisé en ce que à chaque extrémité du chariot, lesdits câbles (25, 26) sont connectés à un système mécanique doté d'une paire de moufles (40, 41), l'une étant fixée au coulisseau (4') du mât télescopique (4), alors que l'autre est fixée à la partie immobile (4) dudit mât.

3. Système de gradins repliable et mobile selon la revendication 2, caractérisé en ce que chaque extrémité de l'une des plates-formes latérales (15) est tractée par un câble (25) dont une extrémité est fixée au niveau de la moufle mobile (41), et s'enroule autour d'une poulie (27) de la moufle fixe (40), l'autre extrémité étant fixée à ladite plate-forme (15).

4. Système de gradins repliable et mobile selon la revendication 2, caractérisé en ce que chaque extrémité de la seconde plate-forme latérale (16) est tractée par un câble (26) dont une extrémité est fixée au niveau de la moufle fixe (40), puis s'enroule autour d'une poulie (42) de la moufle mobile (41), et s'enroule enfin autour d'une poulie (27) de la moufle fixe (40), l'autre extrémité étant fixée à ladite plate-forme (16).

5. Système de gradins repliable et mobile selon l'une quelconque des revendications précédentes, caractérisé en ce que, sur les bords longitudinaux de ladite plate-forme centrale (3), sont montés des éléments verticaux (8, 9), sur les faces extérieures desquelles sont articulées lesdites plates-formes (15, 16), lesquelles, en configuration repliée, sont contenues dans le volume formé par lesdites façades latérales (6, 6'), tandis qu'à l'état déployé, lorsqu'elles constituent le plancher de ladite tribune, lesdites façades (6, 6') relevées forment l'auvent.

6. Système de gradins repliable et mobile selon la revendication précédente, caractérisé en ce que les éléments verticaux (8, 9) des bords longitudinaux de la plate-forme centrale sur lesquels pivotent les plates-formes latérales (15, 16) sont des profilés servant eux-mêmes de supports à des rangées fixes de sièges, et sont de hauteurs différentes.

7. Système de gradins repliable et mobile selon la revendication 6, caractérisé en ce que des éléments verticaux (10) de type profilés sont disposés entre lesdits éléments verticaux (8, 9) des bordures longitudinales, et supportent des rangées de sièges (19).

8. Système de gradins repliable et mobile selon l'une quelconque des revendications précédentes, caractérisé en ce que les plates-formes latérales (15, 16) comprennent des socles (20) de type profilés supportant des rangées de sièges (17, 18), qui sont disposés sur lesdites plates-formes (15, 16) de manière à être verticaux en position déployée.

9. Système de gradins repliable et mobile selon l'une quelconque des revendications précédentes, caractérisé en ce que les plates-formes latérales (15, 16) en position déployée sont en butée contre des éléments (35) fixés à la plate-forme centrale (3).

10. Système de gradins repliable et mobile selon l'une quelconque des revendications précédentes, caractérisé en ce que des vérins (30) et/ou des poutrelles d'appui (34) sont répartis longitudinalement le long des bords extérieurs longitudinaux des plates-formes (3, 15, 16), de manière à assurer leur stabilité et la solidité de l'ensemble déployé.

11. Système de gradins repliable et mobile selon l'une quelconque des revendications précédentes, caractérisé en ce que des garde-corps (32, 33) sont placés aux extrémités de chaque travée de sièges (17, 18, 19) et derrière la dernière travée supérieure de sièges (18).

12. Système de gradins repliable et mobile selon la revendication 11, caractérisé en ce que lesdits garde-corps (32, 33) sont fixes sur les côtés latéraux de la tribune ou repliables le long du bord longitudinal supérieur, par exemple par pivotement autour d'axes situés à la base des sièges supérieurs.

13. Système de gradins repliable et mobile selon l'une quelconque des revendications précédentes, caractérisé en ce que la plate-forme centrale (3) comporte un crochet de remorquage amovible, en vue de permettre l'accrochage, à un même engin de traction, de plusieurs plates-formes semblables qui, mises bout à bout, constitueront une tribune de même hauteur, mais de plus grande longueur.

## Patentansprüche

1. Zusammenklappbares und mobiles Treppenstufen-Tribünensystem des Typs, der gebildet ist aus einem Rahmen (1), der an Rädern (2) angebracht ist und eine mittige horizontale Plattform (3) trägt, die mit vertikalen Elementen (8, 9) ausgerüstet ist, an deren Außenseite zwei seitliche, longitudinale Plattformen (15, 16) um horizontale Achsen (11, 12) schwenkbar angebracht sind, die eine erste Konfiguration einnehmen können, in der sie, wenn sie gegeneinander zusammengeklappt sind, eine Einheit bilden, deren Volumenabmessungen die Vorschriften erfüllen, die auf Fahrzeuge des Anhängertyps anwendbar sind, und die von einem den Rahmen (1) an Rädern (2) enthaltenden Fahrzeug bewegt werden kann, und eine zweite Konfiguration einnehmen können, in der sie auf verschiedenen Ebenen nach außen geklappt sind und eine Struktur mit dem Verlauf einer schiefen Ebene bilden, die in Treppenstufen angebrachte Sitze (17, 18) aufnehmen kann und eine selbständige Tribüne bildet, wobei die mittige horizontale Plattform wenigstens zwei horizontale Paare von Teleskopmasten (4, 4') trägt, die sich an den Enden der mittigen Plattform (3) befinden und ein mittiges Dach (5) tragen, an dessen äußeren longitudinalen Kanten zwei Platten (6, 6') angelenkt sind, die seitliche Fassaden bilden, dadurch gekennzeichnet, daß Mittel zum gleichzeitigen Einklappen und Ausklappen der Plattformen (15, 16) vorgesehen sind, um den Boden der Tribüne zu bilden, die auf einem System basieren, das durch Zug an Seilen (25, 26) arbeitet, die in der Nähe des äußeren longitudinalen Randes jeder Plattform (15, 16) mit jedem Ende derselben eingehakt sind, und von Hand ausgehend von den Teleskopmasten (4, 4') gesteuert werden.

2. Zusammenklappbares und mobiles Treppenstufensystem nach Anspruch 1, dadurch gekennzeichnet, daß an jedem Ende des Schlittens die Seile (25, 26) mit einem mechanischen System verbunden sind, das mit einem Paar Flaschenzügen (40, 41) versehen ist, wovon einer an einem Gleiter (4') des Teleskopmasts (4) befestigt ist, während der andere am unbeweglichen Teil (4) des Masts befestigt ist.

3. Zusammenklappbares und mobiles Treppenstufensystem nach Anspruch 2, dadurch gekennzeichnet, daß jedes Ende der seitlichen Plattformen (15) durch ein Seil (25) gezogen wird, dessen Ende auf seiten des beweglichen Flaschenzugs (41) befestigt ist und um eine Seilscheibe (27) des festen Flaschenzugs (40) gewickelt wird, während das andere Ende an der Plattform (15) befestigt ist.

4. Zusammenklappbares und mobiles Treppenstufensystem nach Anspruch 2, dadurch gekennzeichnet, daß jedes Ende der zweiten seitlichen Plattform (16) durch ein Seil (26) gezogen wird, wovon ein Ende auf seiten des festen Flaschenzugs (40) befestigt ist, das dann um eine Seilscheibe (42) des beweglichen Flaschenzugs (41) gewickelt ist und schließlich um eine Seilscheibe (27) des festen Flaschenzugs (40) gewickelt ist, während das andere Ende an der Plattform (16) befestigt ist.

5. Zusammenklappbares und mobiles Treppenstufensystem nach einem der vorangehenden Ansprüche, dadurch gekennzeichnet, daß an den longitudinalen Rändern der mittigen Plattform (3) vertikale Elemente (8, 9) angebracht sind, an deren Außenflächen die Plattformen (15, 16) angelenkt sind, die in der zusammengeklappten Konfiguration in dem durch die seitlichen Fassaden (6, 6') gebildeten Volumen enthalten sind, während im ausgeklappten Zustand, in dem sie den Boden der Tribüne bilden, die hochgezogenen Fassaden (6, 6') das Vordach bilden.

6. Zusammenklappbares und mobiles Treppenstufensystem nach dem vorangehenden Anspruch, dadurch gekennzeichnet, daß die vertikalen Elemente (8, 9) der longitudinalen Ränder der mittigen Plattform, an denen die seitlichen Plattformen (15, 16) schwenken, Profile sind, die ihrerseits als Träger für feste Sitzreihen dienen und unterschiedliche Höhen besitzen.

7. Zusammenklappbares und mobiles Treppenstufensystem nach Anspruch 6, dadurch gekennzeichnet, daß die vertikalen profilartigen Elemente (10) zwischen den vertikalen Elementen (8, 9) der longitudinalen Ränder angeordnet sind und Sitzreihen (19) tragen.

8. Zusammenklappbares und mobiles Treppenstufensystem nach einem der vorangehenden Ansprüche, dadurch gekennzeichnet, daß die seitlichen Plattformen (15, 16) Profilsockel (20) aufweisen, die an den Plattformen (15, 16) in der Weise angeordnet sind, daß sie in der ausgeklappten Position vertikal sind.

9. Zusammenklappbares und mobiles Treppenstufensystem nach einem der vorangehenden Ansprüche, dadurch gekennzeichnet, daß die seitlichen Plattformen (15, 16) in der ausgeklappten Position an den festen Elementen (35) der mittigen Plattform (3) anliegen.

10. Zusammenklappbares und mobiles Treppenstufensystem nach einem der vorangehenden Ansprüche, dadurch gekennzeichnet, daß longitudinal längs der longitudinalen äußeren Ränder der Plattformen (3, 15, 16) Stellzylinder (30) und/oder Abstützträger (34) verteilt sind, so daß ihre Stabilität und die Festigkeit der ausgeklappten Einheit sichergestellt sind.

11. Zusammenklappbares und mobiles Treppenstufensystem nach einem der vorangehenden Ansprüche, dadurch gekennzeichnet, daß an den Enden jedes Sitzfeldes (17, 18, 19) und hinter dem letzten oberen Sitzfeld (18) Geländer (32, 33) angeordnet sind.

12. Zusammenklappbares und mobiles Treppenstufensystem nach Anspruch 11, dadurch gekennzeichnet, daß die Geländer (32, 33) an den Seiten der Tribüne befestigt sind oder längs des oberen longitudinalen Randes zusammenklappbar sind, beispielsweise durch Schwenkung um Achsen, die sich an der Basis der oberen Sitze befinden.

13. Zusammenklappbares und mobiles Treppenstufensystem nach einem der vorangehenden Ansprüche, dadurch gekennzeichnet, daß die mittige Plattform (3) einen abnehmbaren Schlepphaken enthält, um zu ermöglichen, daß an dieselbe Zugmaschine mehrere ähnliche Plattformen angehängt werden können, die nebeneinandergestellt eine Tribüne mit gleicher Höhe, jedoch mit größerer Länge bilden.

## Claims

1. Mobile and folding stand system with stepped rows of seats, of the type consisting of a chassis (1) mounted on wheels (2) and carrying a central horizontal platform (3), the said platform being equipped with vertical elements (8, 9) on the outsides of which are mounted, pivoting about horizontal axes (11, 12), two lateral longitudinal platforms (15, 16) which can adopt a first configuration in which, being folded towards each other, they constitute an assembly the volumetric dimensions of which are in accordance with the regulatory standards applicable to vehicles of the trailer type, and which can be displaced by a vehicle including the said chassis (1) on wheels (2), and a second configuration in which, deployed outwardly at different levels, they form a structure of slanting flat appearance able to receive seats (17, 18) mounted in stepped rows, forming a self-supporting stand, the said central horizontal platform carrying at least two pairs of telescopic poles (4, 4') situated towards the ends of the central platform (3), these poles (4, 4') supporting a central roof (5), on the outer longitudinal edges of which are hinged two panels (6, 6') forming lateral frontages, characterised by the fact that means are provided for the simultaneous folding and deployment of the said platforms (15, 16) in order to form the floor of the said stand, based on a system functioning by traction on cables (25, 26) fastened in the vicinity of the outer longitudinal edge of each platform (15, 16), at each end of the latter, and controlled manually from the telescopic poles (4, 4').

2. Mobile and folding stepped row seating system as described in claim 1, characterised by the fact that at each end of the carriage the said cables (25, 26) are connected to a mechanical system provided with a pair of pulley systems (40, 41), one being fixed to the slider (4') of the telescopic pole (4), while the other is fixed to the immobile part (4) of the said pole.

3. Mobile and folding stepped row seating system as described in claim 2, characterised by the fact that each end of one of the lateral platforms (15) is pulled by a cable (25) one end of which is fixed at the level of the mobile pulley system (41) and is wound around a pulley (27) of the fixed pulley system (40), the other end being fixed to the said platform (15).

4. Mobile and folding stepped row seating system as described in claim 2, characterised by the fact that each end of the second lateral platform (16) is pulled by a cable (26) one end of which is fixed at the level of the fixed pulley system (40), is then wound around a pulley (42) of the mobile pulley system (41), and is lastly wound around a pulley (27) of the fixed pulley system (40), the other end being fixed to the said platform (16).

5. Mobile and folding stepped row seating system as described in any one of the preceding claims, characterised by the fact that, on the longitudinal edges of the said central platform (3) are mounted vertical elements (8, 9), on the outer faces of which are hinged the said platforms (15, 16) which, in folded configuration, are contained within the volume formed by the said lateral frontages (6, 6'), while in the deployed state, when they form the floor of the said stand, the said frontages (6, 6'), raised, form the canopy.

6. Mobile and folding stepped row seating system as described in the preceding claim, characterised by the fact that the vertical elements (8, 9) of the longitudinal edges of the central platform on which the lateral platforms (15, 16) pivot are sections themselves acting as supports for fixed rows of seats, and are of different heights.

7. Mobile and folding stepped row seating system as described in claim 6, characterised by the fact that vertical elements (10) of profile type are arranged between the said vertical elements (8, 9) of the longitudinal edges and support rows of seats (19).

8. Mobile and folding stepped row seating system as described in any one of the preceding claims,
characterised by the fact that the lateral platforms (15, 16) comprise pedestals (20) of the profile type supporting rows of seats (17, 18) which are arranged on the said platforms (15, 16) so as to be vertical in the deployed position.

9. Mobile and folding stepped row seating system as described in any one of the preceding claims,
characterised by the fact that the lateral platforms (15, 16), in the deployed position, are in abutment against elements (35) fixed to the central platform (3).

10. Mobile and folding stepped row seating system as described in any one of the preceding claims,
characterised by the fact that jacks (30) and/or support beams (34) are distributed longitudinally along the longitudinal outer edges of the platforms (3, 15, 16) so as to stabilise and strengthen the deployed assembly.

11. Mobile and folding stepped row seating system as described in any one of the preceding claims,
characterised by the fact that railings (32, 33) are placed at the ends of each span of seats (17, 18, 19) and behind the last upper span of seats (18).

12. Mobile and folding stepped row seating system as described in claim 11, characterised by the fact that the said railings (32, 33) are fixed onto the lateral sides of the stand or foldable along the upper longitudinal edge, for example by pivoting about axes situated at the base of the upper seats.

13. Mobile and folding stepped row seating system as described in any one of the preceding claims,
characterised by the fact that the central platform (3) includes a detachable towing hook, in order to allow the attachment, to a same traction device, of a plurality of similar platforms which, placed end to end, will form a stand of the same height but of greater length.
